Europäisches Patentamt

European Patent Office

Office européen des brevets

(11) Veröffentlichungsnummer: **0 107 171**
**A1**

(12) # EUROPÄISCHE PATENTANMELDUNG

(21) Anmeldenummer: **83110389.0**

(22) Anmeldetag: **19.10.83**

(51) Int. Cl.³: **A 23 F 5/16**

(30) Priorität: **22.10.82 DE 3239219**

(43) Veröffentlichungstag der Anmeldung: **02.05.84**
**Patentblatt 84/18**

(84) Benannte Vertragsstaaten: **AT BE CH DE FR GB IT LI LU NL SE**

(71) Anmelder: **Coffex AG, CH-8201 Schaffhausen (CH)**

(72) Erfinder: **Kummer, Peter, Schaffhauserstrasse 234, CH-8213 Neunkirch (CH)**
Erfinder: **Ciurea, Ion Constantin, Steinguthalde 6, CH-8201 Schaffhausen (CH)**

(74) Vertreter: **Bolte, Erich, Dipl.-Ing., c/o Meissner & Bolte Patentanwälte Hollerallee 73, D-2800 Bremen (DE)**

(54) Verfahren zur Verminderung des Chlorogensäuregehalts von Rohkaffee.

(57) Beschrieben wird ein Verfahren zur Verminderung des Chlorogensäuregehalts von Rohkaffee, bei dem wasserlösliche säureartige Stoffe mittels einer wässrigen Flüssigkeit aus den Rohkaffeebohnen extrahiert werden und aus dem Extrakt entfernt werden. Dabei werden die Chlorogensäuren in dem Extrakt mit einem Anionenaustauscherharz in flüchtiger Carbonsäureanion-Form, das durch Adsorption mit mindestens einem nicht säureartigen Kaffee-Extraktstoff beladen ist, gegen eine flüchtige Carbonsäure ausgetauscht.

Verfahren zur Verminderung des Chlorogensäuregehalts
von Rohkaffee

B e s c h r e i b u n g

Die Erfindung betrifft ein Verfahren zur Verminderung des Chlorogensäuregehalts von Rohkaffee, bei dem wasserlösliche säureartige Stoffe mittels einer wässrigen Flüssigkeit aus den Rohkaffeebohnen extrahiert werden und aus dem erhaltenen Extrakt entfernt werden.

Zu den physioloigsch wichtigen Inhaltsstoffen des Kaffees zählen neben Alkaloiden, wie Coffein und Trigonellin, auch die Chlorogensäuren, die die wichtigsten und quantitativ überlegenen Mengen (80 - 90 %) der sich im Kaffee befindlichen Säuren darstellen.

0107171

Obwohl die physiologische Wirkung der Chlorogensäuren bisher noch nicht völlig geklärt wurde, zeigten verschiedene Untersuchungen, daß diese Stoffe die Bekömmlichkeit des Kaffees für magenempfindliche Personen negativ beeinflussen,und es wurde behauptet, daß "das Problem der Kaffeebekömmlichkeit zum Teil auch ein Chlorogensäureproblem ist" (G. Lehman, Ernährungs-Umschau, 1971, 18, S. 43 - 47).

Es wurde vermutet, daß die Chlorogensäuren nicht nur Magenacidität hervorrufen, sondern auch zu einer Reizung der Magenschleimhaut führen. Versuche an Tauben zeigten, daß zwar Chlorogensäure und Chinasäure emetisch unwirksam sind, nicht flüchtige phenolische Röstprodukte von Chlorogensäure aber ein Erbrechen auslösen können (G. Malorny und W. Walter, 3. Int. Koll. über Kaffee-Chemie, Triest 1967, ASIC-Paris, 1968, S. 374 - 380).

Technische Verfahren zur Verringerung des Chlorogensäuregehalts im Kaffee müssen so durchgeführt werden, daß das typische Aroma des Kaffeegetränks erhalten bleibt. Da sich die meisten Aromastroffe beim Röstprozeß bilden, wird es nach dem Rösten schwer, eine selektive Entsäuerung sowie die Abtrennung von Chlorogensäure-Röstprodukten ohne Beeinträchtigung des Aromas zu erzielen.

Es ist sinnvoll, den Chlorogensäuregehalt von Kaffee vor dem Röstprozeß zu verringern. Dadurch wird auch eine Verringerung der Emetica, die beim Rösten durch Abbau von Chlorogensäuren entstehen, erreicht.

Gleichzeitig ist es wünschenswert, den Gehalt an Coffein des Kaffeegetränks nicht beträchtlich zu verringern, um die anregenden Eigenschaften des Getränks auch für magenempfindliche Verbraucher beizubehalten.

Die Entsäuerung durch Hinzufügen alkalischer Neutralisationsmittel zu Kaffee-Extrakt kann das Problem nicht zufriedenstellend lösen, da die Chlorogensäureanionen in der Lösung bleiben, und es tritt auch eine Erhöhung des Salzgehaltes ein. Bei höheren pH-Werten werden die polyphenolartigen Stoffe auch leichter oxidierbar und können Nebenprodukte bilden.

Wasserdampfbehandlungsverfahren, um die Bekömmlichkeit des Kaffees zu verbessern, wie das bekannte Lendrich-Verfahren (DE-PS 576 515) und seine Weiterentwicklungen (z. B. das KVW-Verfahren, DE-AS 2 212 171),führen zum teilweisen Abbau der Chlorogensäure. Es wurde festgestellt (W.A. König, W. Rahn und R. Vetter, 9. Int. Wiss. Koll. über Kaffee, London 1980, ASIC Paris, 1981, S. 145 - 149), daß durch den Wasserdampf emetische Abbauprodukte der Chlorogensäure in geringem Umfang entfernt werden. Die Veränderungen bei der Wasserdampfbehandlung halten sich jedoch in bescheidenem Rahmen.

Eine andere Möglichkeit zur Entfernung von in Kaffee-Extrakt enthaltenen Säuren besteht darin, diese Säuren durch Adsorption aus Kaffee-Extrakt zu trennen.

Bei der Adsorption werden wenig selektiv viele Kaffee-Extraktinhaltsstoffe entfernt. Das ist bei Entcoffeinierungsverfahren der Fall, die z. B. Aktivkohle (DE-PS 685 367) oder ein neutrales polymeres Harz (FR-Anm. 2 297 004) als Adsorptionsmittel für Coffein verwenden, aber auch hohe Verluste an anderen Stoffen, wie die Chlorogensäuren, ergeben. Eine gleichzeitige Verringerung des Gehalts an Coffein und Chlorogensäure wurde auch durch Adsorption an Johannisbrothülsen erzielt (DE-OS 2 826 466).

Durch Chemisorption können selektiv die säureartigen Stoffe aus einer Lösung entfernt werden, und es sind Verfahren bekannt geworden, wobei aktiviertes Polyamidpulver (DE-AS 1 692 249) oder Chitosan (DE-OS 2 931 258) zur Entsäuerung der Kaffee-Extrakte verwendet werden. Diese Verfahren bewirken eine drastische Änderung der pH-Werte der Kaffee-Extrakte und haben damit einen negativen Einfluß auf die Kaffee-Qualität.

Gegenstand der Erfindung ist ein Verfahren zur Verminderung des Chlorogensäuregehalts von Kaffee, das darin besteht, daß man einen wässrigen Extrakt von grünen Kaffeebohnen mit einem polymeren Anionenaustauscherhatz in der Form eines flüchtigen Carbonsäureanions, das durch Adsorption mit mindestens einem nicht säureartigen Kaffee-Extrakt-Inhaltsstoff beladen ist, in Berührung bringt, um die in dem wässrigen Extrakt enthaltenen Säuren mit der flüchtigen Carbonsäure auszutauschen. Danach wird der wässrige Kaffee-Extrakt in einem Verdampfer eingeengt, wobei ein Teil der flüchtigen Carbonsäure mit dem Wasserdampf die Lösung verläßt, oder der Extrakt wird zur vollständigen Entfernung der flüchtigen Carbonsäuren einer Wasserdampfdestillation unterzogen.

Der eingeengte und entsäuerte Extrakt kann dann in die mit Wasser extrahierten und nachher vorgetrockneten grünen Kaffeebohnen wieder aufgenommen werden oder nach entsprechender Verdünnung zum Extrahieren anderer grüner Kaffeebohnen verwendet werden.

Auffällige Reste an flüchtiger Carbonsäure, die im Prozeß in den Kaffeebohnen verbleiben, werden dann beim Rösten entfernt. Beim Rösten bilden sich auch aus den im Kaffee enthaltenen Estern kleine Mengen an freien flüchtigen Carbonsäuren, wie Ameisensäure und Essigsäure, so daß diese Säuren als Röstkaffeeinhaltsstoffe zu betrachten sind.

Die Regenenierung des Anionenaustauschers bzw. die Eluierung der Chlorogensäure erfolgt mit einer konzentrierten wässrigen Lösung der flüchtigen Säure, vorzugsweise gegebenenfalls des entsprechenden Azeotrop-Gemischs, in einem Destillationskreislauf. Die überschüssige Carbonsäure wird nach der Regenierung mit Wasser ausgespült. Da bei dem Eluierungsvorgang und während der Spülung bis zu einem gewissen Ausmaß auch eine Desorption stattfindet, wird der Ionenaustauscher vor dem Wiedereinsetzen zuerst durch Adsorption mit mindestens einem nicht säureartigen Kaffee- Extraktinhaltsstoff beladen.

Nachstehend werden Beispiele bevorzugter Ausführungsformen des erfindungsgemäßen Verfahrens näher erläutert.

Für das erfindungsgemäße Verfahren können die verschiedensten Anionenaustauscherharze verwendet werden. Bevorzugt verwendet man solche mit guten Retentionseigenschaften gegenüber der Chlorogensäure. Beispielsweise haben sich die makronetzartigen mittelbasischen oder schwachbasischen Anionenaustauscherharze auf Styrol-Divinylbenzol-Basis, wie z. B. Amberlite IRA-93, als besonders gut geeignet für die Chlorogensäureentfernung erwiesen. Die Anionenaustauscherharze zeigen neben einer besonderen Temperaturbeständigkeit gute Austauschkapazität, Beständigkeit bei organischer Verschmutzung und können nachher leicht regeneriert werden.

Wenn sich der Anionenaustauscher am Anfang in der handelsüblichen freien Basenform befindet, soll er zuerst in üblicher Weise in die flüchtige Carbonsäureanionform übergeführt werden. Das geschieht mit einer wässrigen Lösung der entsprechenden Carbonsäure,und der Säureüberschuß wird mit Wasser weggespült.

Um die Adsorptionswirkung des Ionenaustauschers für die Kaffee-Extrakt-Inhaltsstoffe, insbesondere für Coffein,zu verringern, kann anschließend der Ionenaustauscher mit einer wässrigen Lösung von mindestens einem gesundheitlich unbedenklichen, nicht säureartigen Stoff durch Adsorption beladen werden, insbesondere Stoffe, die im Rohkaffee oder im Röstkaffee natürlich vorkommen, wie z. B. Coffein. Der Überschuß dieser Lösung wird mit Wasser weggespült.

Bei Verwendung eines schon benutzten Ionenaustauschers liegt dieser nach dem Eluieren gemäß dem vorliegenden Verfahren schon in der gewünschten Carbonsäureanionenform vor und braucht nur mit Wasser gespült zu werden. Auch adsorptionsmäßig ist in diesem Fall der Ionenaustauscher teilweise beladen und braucht kleinere Mengen an nicht säureartigen Stoffen zur Beladung.

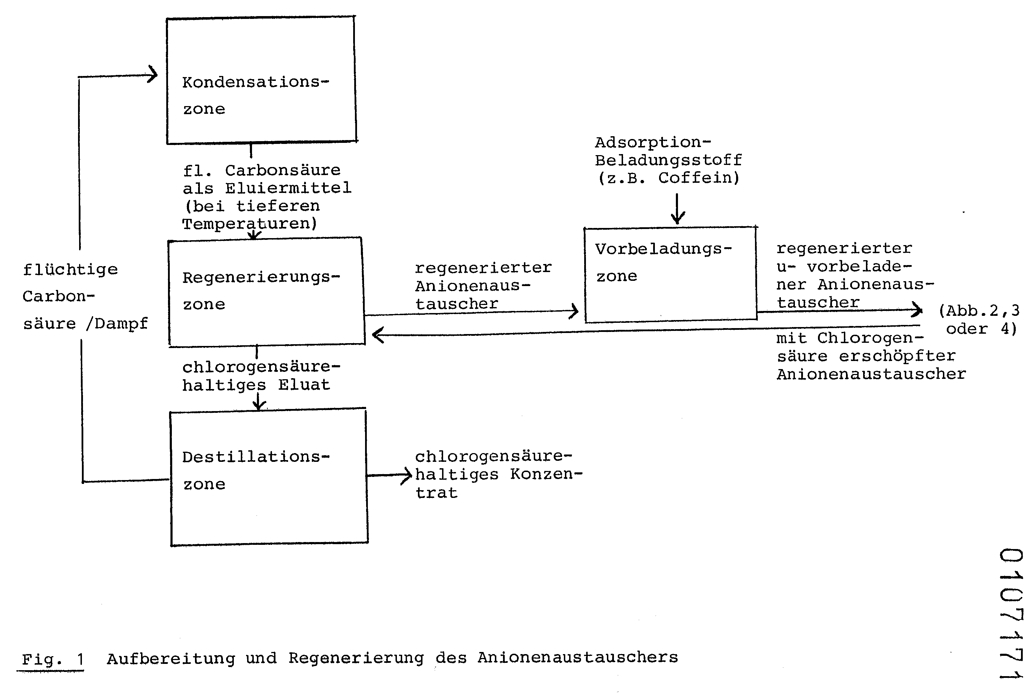

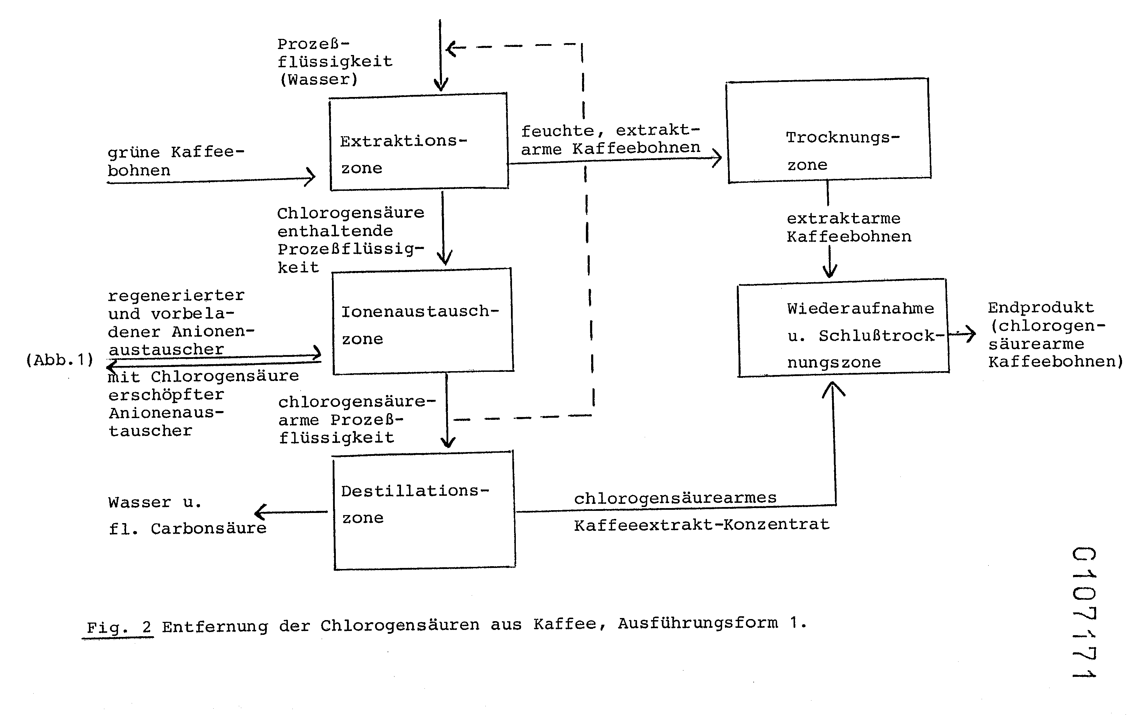

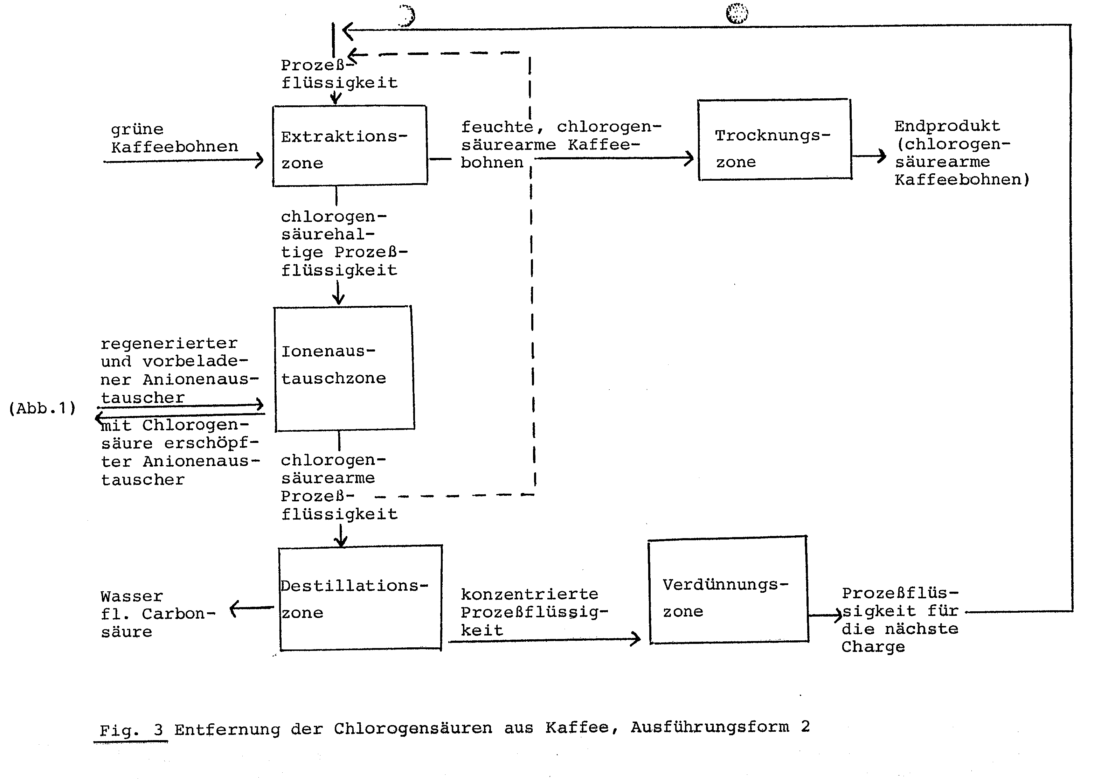

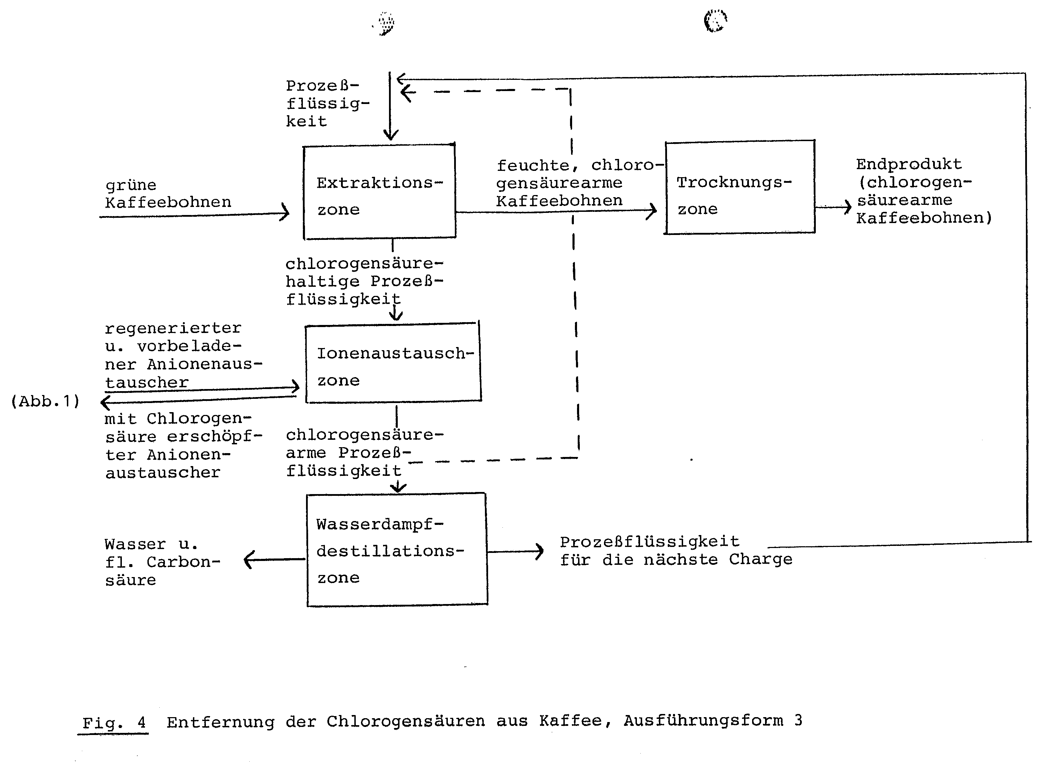

Um die Wirtschaftlichkeit des Verfahrens zu gewährleisten, ist es günstig, wenn die Regenerierung des Ionenaustauschers leicht, ohne hohen materiellen Aufwand durchgeführt werden kann, d. h. daß auch das Eluiermittel wiederverwendbar ist. Die Bindung der Chlorogensäure an den Ionenaustauscher ist ziemlich stark, und Eluierversuche mit Salzsäure oder Natronlauge, um den Ionenaustauscher in die Chlorid- bzw. freie Base-Form überzuführen, zeigten sich als sehr aufwendig. Es hat sich herausgestellt, daß die besten Eluiermittel für die Chlorogensäuren wässrige Lösungen von niedermolekularen flüchtigen Carbonsäuren, vorzugsweise Ameisensäure- und Essigsäurelösungen sind. Die Eluierwirksamkeit steigt mit der Konzentration der Carbonsäurelösung an. Um mit vernünftigen Eluiermittelmengen auszukommen und gleichzeitig eine hohe Konzentration derselben zu gewährleisten, wurde der Ionenaustauschereluiervorgang in einem Destillationskreislauf durchgeführt. Die Chlorogensäuren konzentrieren sich in dem Destillationskolben, und das Kondensat wird nach der Destillation als Eluiermittel wieder über den Ionenaustauscher geführt. Diese Arbeitsweise kann auch als umweltfreundlich betrachtet werden. Ein Beispiel für die Aufbereitung und Regenerierung des Anionenaustauschers ist im Blockschema der beigefügten Figur 1 wiedergegeben.

Analysen beim Eluiervorgang haben gezeigt, daß der Ionenaustausch von der Steigerung der Temperatur praktisch unbeeinflußt bleibt. Die Ionenaustauscherharze haben aber auch eine gewisse Adsorptionskapazität und halten dadurch auch andere Kaffeeinhaltsstoffe, wie z. B. Coffein in kleineren Mengen, aus dem Kaffee-Extrakt zurück. Bei den Eluierversuchen stellte sich heraus, daß der Desorptionsvorgang des Coffeins von der Konzentration des Eluiermittels praktisch unabhängig ist, aber die Desorption durch Erhöhung der Temperatur begünstigt wird. Ein ähnliches Verhalten zeigte Coffein auch gegenüber nicht ionischen polymeren Harzen, die zur Entcoffeinierung durch Adsorption verwendet werden können (DE-OS 2 832 267). Es empfiehlt sich deshalb, das Eluieren bei tieferen Temperaturen durchzuführen, um möglichst wenig von den adsorbierten Stoffen herauszuholen und die Verluste durch Adsorption an die nächsten Chargen beim Wiedereinsetzen des Ionenaustauschers zu vermindern. Diesem Zweck dient auch die schon erwähnte Vorbeladung des Ionenaustauschers, die nach der Regenerierung erfolgen kann.

Zur Entfernung der Chlorogensäuren aus Kaffee wird beispielsweise grüner Kaffee mit Wasser oder einer wässrigen Flüssigkeit warm extrahiert, und aus der Flüssigkeit werden die säureartigen bzw. sauren Stoffe, vorwiegend Chlorogensäuren, mit einer leicht flüchtigen niedermolekularen Carbonsäure mittels eines vorbehandelten Anionenaustauscherharzes ausgetauscht.

Vorzugsweise wird jeweils eine Charge Rohkaffee in einem Extraktor mit der Prozeßflüssigkeit bei einer Temperatur zwischen 40 - 100°C, vorzugsweise 70 - 90°C, versetzt und die wässrige Extraktlösung über ein Filter und durch eine Anionenaustauscher-Säule im Kreislauf umgepumpt, bis die gewünschte Gehaltsverminderung an Chlorogensäure erreicht wird.

Ebenfalls kann der Kaffee ein- bis mehrmals mit einer chlorogensäurefreien Kaffee-Extraktlösung extrahiert werden; dies je nach gewünschtem Entsäuerungsgrad. Die resultierenden chlorogensäurehalten Extrakte werden separat über den Ionentauscher wieder von der Chlorogensäure befreit und stehen für weitere Kaffee-Extraktionen zur Verfügung. Dies hat den Vorteil, daß sowohl für die Extraktion des Kaffees als auch für den Ionenaustausch der Chlorogensäure optimale Prozeßbedingungen gewährt werden können.

Das Verhältnis der Kaffeemenge zur Ionenaustauschermenge beträgt 10:1 bis 1:5, vorzugsweise 3:1 bis 1:1,5 (in kg).

In einer ersten Ausführungsform wird als Prozeßflüssigkeit Wasser eingesetzt. In dieser Ausführungsform werden aus den Kaffeebohnen natürlich auch andere Extraktstoffe als nur säureartige Stoffe herausgelöst, die nach dem Ionenaustausch wieder mit den Bohnen vereinigt werden müssen. Zu diesem Zweck kann ähnlich wie bei dem Entcoffeinierungsverfahren der EP-PS 0008398 gearbeitet werden, wobei bei der Einengung des Extraktes teilweise auch die ausgetauschte flüchtige Carbonsäure die Lösung mit dem Wasserdampf verläßt. Diese Ausführungsform wird im Blockschema der beigefügten Figur 2 erläutert.

In anderen Ausführungsformen kann man als Prozeßflüssigkeit für das Extrahieren des grünen Kaffees eine chlorogensäurearme Kaffee-Extraktlösung einsetzen, deren Konzentrationen an Kaffee-Inhaltsstoffen so hoch ist, daß aus den Kaffeebohnen nur die säureartigen Inhaltsstoffe herausgelöst werden und die Konzentrationen der anderen Inhaltsstoffe in der Lösung mit den Konzentrationen in den Kaffeebohnen im Gleichgewicht stehen. Diese Prozeßflüssigkeit wird von einer anderen Charge erhalten, wobei man die Mengen an ausgetauschter flüchtiger Carbonsäure zum größten Teil aus dem Extrakt entfernt hat. Dies kann entweder durch Einengen des Extrakts, durch Destillation unter vermindertem Druck, gefolgt von einem entsprechenden Verdünnen erfolgen (Ausführungsform 2), oder durch eine Wasserdampfdestillation erreicht werden (Ausführungsform 3). Die so behandelten Bohnen müssen anschließend nur noch getrocknet werden. Die Ausführungsformen 2 und 3 sind im Blockschema der Figuren 3 bzw. 4 wiedergegeben.

Das erfindungsgemäße Verfahren bietet verschiedene Vorteile. Es hat sich gezeigt, daß der Geschmack des gerösteten Kaffees bzw. des daraus bereiteten Kaffeegetränks trotz der Beseitigung der Chlorogensäuren günstig ist. Außerdem ist keine wiederholte Neubeladung des Anionenaustauscherharzes notwendig, da flüchtige Carbonsäure und Kaffee-Extraktstoffe vorhergehender Chargen kontinuierlich ausgenutzt werden können.

Die Erfindung wird durch die folgenden Ausführungsbeispiele näher erläutert.

Beispiel 1

In eine Säule von 13 l Inhalt mit einem Innendurchmesser von 10 cm werden 6 kg von zuerst mit Wasser gequollenem, dann mit einer wässrigen Ameisensäurelösung in die Formiatform übergeführtem Amberlite IRA 93-Anionenaustauscher gefüllt. Die Säule wird dann mit Wasser gespült, um den Überschuß an Ameisensäure zu entfernen. Durch die Ionenaustauschersäule werden dann 20 l 2 %ige wässrige Coffeinlösung eine Stunde im Kreislauf mit einem Durchfluß von 200 l/h umgepumpt. Anschließend wird der Überschuß an Coffein, der von dem Ionenaustauscher nicht adsorbiert wurde, mit einem Volumen Wasser herausgespült, das dem Doppelten des offenen Raumes in dem Ionenaustauscherbett entspricht.

In einen Extraktor von ca. 50 l Inhalt werden 10 kg Rohkaffeebohnen und 35 l Wasser gegeben. Über Pumpe und Filter wird die Flüssigkeit bzw. Extraktlösung bei 70° C mit 200 l/h Durchfluß im Kreislauf durch die Anionenaustauschersäule umgepumpt. Nach 4 bis 5 Stunden wird eine Verminderung des Chlorogensäuregehalts von über 60 % erhalten.

Nun wird die gesamte wässrige Extraktlösung einschließlich der Menge, die mit einem Volumen Wasser, das vorzugsweise zweimal so groß ist wie das Volumen des offenen Raumes in dem Ionenaustauscherbett, aus der Ionenaustauschersäule herausgespült wurde, in eine Destilliervorrichtung eingebracht und unter Vakuum auf etwa 1/4 bis 1/5 des ursprünglichen Volumens aufkonzentriert. Die Bohnen werden mit Heißluft auf 25 bis 30 % Feuchtigkeit getrocknet; anschließend werden die konzentrierte Extraktlösung und die getrockneten Bohnen im Extraktor wieder zusammengegeben. Nach der Wiederaufnahme der Extraktlösung werden die Bohnen mit Heißluft auf den normalen Feuchtigkeitsgehalt des Rohkaffees von 8 bis 10 % Wasser getrocknet.

Die Ionenaustauschersäule wird dann mit Ameisensäurewasser-Azeotrop-Gemisch gefüllt und in einen Destillationskreislauf eingeschaltet. Aus einem 10-Liter-Glaskolben, gefüllt mit 7 l Ameisensäure/Wasser-Azeotrop-Gemisch, destilliert das Azeotrop-Gemisch, und nach Abkühlen auf Raumtemperatur wird es als Eluiermittel in die Ionenaustauschersäule eingeführt, während das herauskommende Eluat, das Chlorogensäure enthält, laufend in den Destillationskolben eingebracht wird.

Der Durchfluß beträgt zwischen 10 und 30 l/h, und nach zwei bis drei Stunden ist die Anionenaustauschersäule in genügendem Ausmaß regeneriert, um wieder für die Chlorogensäureentfernung eingesetzt werden zu können.

Beispiel 2

In einen Extraktor von ca. 50 l Inhalt werden 10 kg Roh-kaffeebohnen und 10 l Wasser gegeben und unter ständigem Umrühren eine Stunde bei 80° C gehalten, bis das Wasser von den Kaffeebohnen aufgenommen wird. Die gequollenen Kaffeebohnen werden mit 20 l entsäuertem Rohkaffee-Extrakt versetzt. Dieser Extrakt weist eine Konzentration an Kaffee-Inhaltsstoffen von ca. 14 % auf. Er wurde durch wässrige Extraktion von Rohkaffeebohnen desselben Ursprungs erhalten und mittels Anionenaustauscher wie folgt entsäuert. Nach ständigem Umrühren zwischen vier und fünf Stunden bei 80° C wird durch Extraktion eine Verminderung des Chlorogensäuregehalts der Kaffeebohnen von etwa 50 % erhalten.

Die Extraktlösung wird von den Kaffeebohnen getrennt, abfiltriert und mit Hilfe der in Beispiel 1 beschriebenen Anionenaustauscher-Säule bei einem Durchfluß von 4 l/h entsäuert. Nachdem die ganze Extraktlösung über die Anionenaustauscher-Säule geführt wurde, wird, wie im Beispiel 1, der Anionenaustauscher mit Wasser gespült. Die Extraktlösung wird dann durch Einengung von Ameisensäure weitgehend befreit und auf die gewünschte Konzentration gebracht, um zur Chlorogensäure-Extraktion einer anderen Kaffeebohnen-Charge verwendet zu werden.

Die Regenerierung des Anionenaustauschers erfolgt wie im Beispiel 1.

Die behandelten Rohkaffeebohnen werden mit Heißluft auf den normalen Feuchtigkeitsgehalt des Rohkaffees von 8 bis 10 % Wasser getrocknet.

Die unbehandelten und behandelten Rohkaffeebohnen wurden jeweils nach entsprechender Röstung gemäß den Vorschriften des schweizerischen Lebensmittelgesetzes analysiert. Der unbehandelte Rohkaffee enthielt nach dem Rösten 31 % Extrakt und 1,5 % Coffein, der nach Beispiel 1 behandelte Kaffee enthielt 25 % Extrakt und 1,35 % Coffein, und der nach Beispiel 2 behandelte Kaffee enthielt 26,5 % Extrakt und 1,45 % Coffein. Der durch HPLC bestimmte Chlorogensäuregehalt ist von 4,2 % auf 1,5 % in Beispiel 1 und auf 2,2 % in Beispiel 2 gesunken.

Die Analyse der flüchtigen Säure im Röstkaffee ergab einen Gehalt von 7,8 mVal/100 g Trockensubstanz bei den unbehandelten Bohnen, 8,5 mVal/100 g Trockensubstanz bei den in Beispiel 1 behandelten Bohnen und 8,3 mVal/100 g Trockensubstanz bei den in Beispiel 2 behandelten Bohnen. Der Unterschied zwischen den drei Werten liegt in dem Bereich normaler Schwankungen für den flüchtigen Säuregehalt, die durch Röstunterschiede verursacht sein können.

0107171

Verfahren zur Verminderung des Chlorogensäuregehalts
von Rohkaffee

Patentansprüche

1. Verfahren zur Verminderung des Chlorogensäuregehalts von Rohkaffee, bei dem wasserlösliche säureartige
Stoffe mittels einer wässrigen Flüssigkeit aus den Rohkaffeebohnen extrahiert werden und aus dem erhaltenen Extrakt
entfernt werden,
d a d u r c h   g e k e n n z e i c h n e t ,
daß man die Chlorogensäuren in dem Extrakt mit einem
Anionenaustauscherharz in flüchtiger Carbonsäureanion-Form,
das durch Adsorption mit mindestens einem nicht säureartigen Kaffee-Extraktstoff beladen ist, gegen eine flüchtige
Carbonsäure austauscht.

2. Verfahren nach Anspruch 1, dadurch gekennzeichnet, daß der Anionenaustauscher aus der Klasse makronetzartiger mittel- und schwachbasischer Ionenaustauscherharze ausgewählt wird.

3. Verfahren nach einem der Ansprüche 1 und 2, dadurch gekennzeichnet, daß die flüchtige Carbonsäure zum Kaffee-Inhaltsstoff gehört und vorzugsweise Essig- und/oder Ameisensäure ist.

4. Verfahren nach einem der Ansprüche 1 bis 3, dadurch gekennzeichnet, daß das Anionenaustauscherharz durch Adsorption mit mindestens einem nicht säureartigen Kaffee-Extrakt-Inhaltsstoff beladen wird und die Beladungsmenge so gewählt wird, daß beim nachfolgenden Ionenaustausch der säureartigen Stoffe die anderen Kaffee-Extraktstoffe in der wässrigen Flüssigkeit annähernd unverändert bleiben.

5. Verfahren nach einem der Ansprüche 1 bis 4, dadurch gekennzeichnet, daß das Gewichtsverhältnis der Kaffeemenge zur Anionenaustauschermenge 10:1 bis 1:5, vorzugsweise 3:1 bis 1:1,5 beträgt.

6. Verfahren nach einem der Ansprüche 1 bis 5, dadurch gekennzeichnet, daß die wässrige Flüssigkeit im Kreislauf durch einen eine Charge des Rohkaffees enthaltenden Extraktor und eine Anionenaustauscher enthaltende Säule gefördert wird.

7. Verfahren nach einem der Ansprüche 1 bis 6, dadurch gekennzeichnet, daß nach Erreichen der gewünschten Chlorogensäuregehaltverminderung der Kreislauf unterbrochen wird, der wässrige Extrakt von den Kaffeebohnen getrennt wird und in eine Destillationsvorrichtung eingeführt wird.

8.          Verfahren nach Anspruch 7, dadurch gekennzeichnet, daß der wässrige Extrakt in der Destillationsvorrichtung bei verringertem Druck eingeengt wird, wobei
die ausgetauschte flüchtige Säure zusammen mit dem Wasserdampf teilweise die Flüssigkeit verläßt.

9.          Verfahren nach Anspruch 8, dadurch gekennzeichnet, daß der eingeengte Extrakt entweder in die mit
Wasser extrahierten, teilweise vorgetrockneten Kaffeebohnen wieder aufgenommen wird oder nach entsprechender Verdünnung als wässrige Flüssigkeit zum Extrahieren anderer
Kaffeebohnen dient.

10.         Verfahren nach Anspruch 7, dadurch gekennzeichnet, daß der wässrige Extrakt in der Destillationsvorrichtung einer Wasserdampfdestillation unterworfen wird,
um die ausgetauschte flüchtige Carbonsäure zu entfernen und
weiter als wässrige Flüssigkeit zum Extrahieren anderer Kaffeebohnen dienen zu können.

11.         Verfahren nach Anspruch 7, dadurch gekennzeichnet, daß die Anionenaustauschersäule nach dem Gebrauch
mit einem Volumen an Wasser gespült wird, das dem Doppelten
des offenen Raumes in dem Ionenaustauscherbett entspricht,
und die Spülflüssigkeit der wässrigen Flüssigkeit in der
Destillationsvorrichtung zugegeben wird.

12.         Verfahren nach Anspruch 11, dadurch gekennzeichnet, daß die Anionenaustauschersäule nach der Spülung
in einen Destillationskreislauf zur Regenerierung mit einem
Eluierungsmittel eingeschaltet wird, wobei die eluierten
Stoffe sich im Destillationsgefäß konzentrieren und das gekühlte Destillat zum weiteren Eluieren dient.

13.         Verfahren nach Anspruch 12, dadurch gekennzeichnet, daß das Eluieren des Anionenaustauschers bei einer Temperatur zwischen 5 und 50°C, vorzugsweise zwischen 10 und 30°C, stattfindet.

14. Verfahren nach einem der Ansprüche 1 bis 13, dadurch gekennzeichnet, daß das Eluiermittel eine konzentrische wässrige Lösung der zum Kaffeeinhaltsstoff gehörenden, flüchtigen Carbonsäure ist, die durch den Eluiervorgang gleichzeitig den Anionenaustauscher zu der gewünschten, zur Weiterverwendung benötigten Carbonsäureanion-Form regeneriert.

Kondensations-zone

fl. Carbonsäure
als Eluiermittel
(bei tieferen
Temperaturen)

flüchtige
Carbonsäure /Dampf

Regenerierungs-zone

regenerierter
Anionenaustauscher

Adsorption-
Beladungsstoff
(z.B. Coffein)

Vorbeladungs-zone

regenerierter
u- vorbeladener Anionenaustauscher

(Abb.2,3
oder 4)

mit Chlorogensäure erschöpfter
Anionenaustauscher

chlorogensäure-
haltiges Eluat

Destillations-zone

chlorogensäure-
haltiges Konzentrat

Fig. 1  Aufbereitung und Regenerierung des Anionenaustauschers

0107171

Prozeßflüssigkeit
(Wasser)

grüne Kaffeebohnen → **Extraktions-zone**

feuchte, extrakt-arme Kaffeebohnen → **Trocknungs-zone**

Chlorogensäure
enthaltende
Prozeßflüssigkeit

extraktarme
Kaffeebohnen

regenerierter
und vorbeladener Anionenaustauscher →

**Ionenaustausch-zone**

**Wiederaufnahme u. Schlußtrock-nungszone** → Endprodukt
(chlorogensäurearme
Kaffeebohnen)

(Abb.1)

mit Chlorogensäure
erschöpfter
Anionenaustauscher

chlorogensäurearme Prozeßflüssigkeit

Wasser u.
fl. Carbonsäure ← **Destillations-zone**

chlorogensäurearmes
Kaffeeextrakt-Konzentrat

Fig. 2 <u>Entfernung</u> der Chlorogensäuren aus Kaffee, Ausführungsform 1.

C 1 0 7 1 7 1

grüne Kaffeebohnen → **Extraktionszone**

Prozeßflüssigkeit →

feuchte, chlorogensäurearme Kaffeebohnen → **Trocknungszone** → Endprodukt (chlorogensäurearme Kaffeebohnen)

chlorogensäurehaltige Prozeßflüssigkeit →

**Ionenaustauschzone**

(Abb.1) regenerierter und vorbeladener Anionenaustauscher →

mit Chlorogensäure erschöpfter Anionenaustauscher ←

chlorogensäurearme Prozeßflüssigkeit →

**Destillationszone**

Wasser fl. Carbonsäure ←

konzentrierte Prozeßflüssigkeit →

**Verdünnungszone**

Prozeßflüssigkeit für die nächste Charge

Fig. 3 Entfernung der Chlorogensäuren aus Kaffee, Ausführungsform 2

0107171

Prozeß-
flüssigkeit

grüne
Kaffeebohnen → **Extraktions-zone** → feuchte, chloro-gensäurearme Kaffeebohnen → **Trocknungs-zone** → Endprodukt (chlorogen-säurearme Kaffeebohnen)

chlorogensäure-haltige Prozeß-flüssigkeit

regenerierter u. vorbelade-ner Anionenaus-tauscher → **Ionenaustausch-zone**

(Abb.1)

mit Chlorogen-säure erschöpf-ter Anionen-austauscher

chlorogensäure-arme Prozeß-flüssigkeit

Wasser u. fl. Carbon-säure ← **Wasserdampf-destillations-zone** → Prozeßflüssigkeit für die nächste Charge

Fig. 4  Entfernung der Chlorogensäuren aus Kaffee, Ausführungsform 3

Europäisches
Patentamt

**EUROPÄISCHER RECHERCHENBERICHT**

0107171

Nummer der Anmeldung

EP 83 11 0389

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | RESEARCH DISCLOSURE, Nr. 170, Juni 1978, Seite 51, Nr. 17050 "Chlorogenic acid extraction" * Vollständiger Text * | 1-6 | A 23 F    5/16 |
| | --- | | |
| Y | DE-A-2 639 066 (HAG) * Ansprüche 1,8 * | 1-6 | |
| | --- | | |
| D,A | FR-A-2 067 182 (HAG) * Anspruch 1; Beispiel 3 * | 1,4,6 | |
| | --- | | |
| D,A | EP-A-0 008 398 (COFFEX) * Ansprüche 1,5-7,12 * | 1,9 | |
| | --- | | |
| A | DE-A-1 692 236 (IBENCO) | | |
| | ----- | | RECHERCHIERTE SACHGEBIETE (Int. Cl. ³) |
| | | | A 23 F |

Der vorliegende Recherchenbericht wurde für alle Patentansprüche erstellt.

| Recherchenort | Abschlußdatum der Recherche | Prüfer |
|---|---|---|
| DEN HAAG | 24-01-1984 | DESMEDT G.R.A. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82